# EUROPEAN PATENT SPECIFICATION

(11) **EP 3 035 770 B1**
(45) Date of publication and mention of the grant of the patent: **04.03.2020**
(21) Application number: 13882075.8
(22) Date of filing: 18.09.2013
(51) Int. Cl.: H04W 84/08

(54) **CALL SERVICE IMPLEMENTATION METHOD AND DEVICE**
RUFDIENSTIMPLEMENTIERUNGSVERFAHREN UND VORRICHTUNG
PROCÉDÉ ET DISPOSITIF DE MISE EN OEUVRE DE SERVICE D'APPEL

(30) Priority: 15.08.2013 CN 201310358583
(43) Date of publication of application: 22.06.2016
(73) Proprietor: ZTE Corporation, Shenzhen, Guangdong 518057 (CN)
(72) Inventor: YANG, Chao, Shenzhen Guangdong 518057 (CN)
(74) Representative: Deambrogi, Edgardo
(86) International application number: PCT/CN2013/083811
(87) International publication number: WO 2014/169569

(56) References cited:
- EP-A1- 1 916 852
- EP-A1- 2 519 056
- WO-A1-2013/024334
- WO-A2-96/19906
- CN-A- 101 212 723
- CN-A- 101 772 198
- CN-A- 101 984 682
- CN-A- 101 984 682
- US-A1- 2013 136 098

## Description

### Technical Field

The disclosure relates to the communications field, and in particular to a method and device for implementing a call service.

### Background

In the related art, a trunking communication system is a specific industry application-oriented dedicated wireless communication system developed to meet a commanding and dispatching requirement of a user in the industry. In the trunking communication system, a small number of wireless channels are shared by a great number of wireless users, commanding and dispatching are main applications, and the trunking communication system is a multipurpose and high-efficiency wireless communication system, has unique characteristics of dispatching, group calling, fast calling and the like, and has become a development direction of a next-generation trunking system.

A Long Term Evolution (LTE) trunking communication system extends various requirements and functions for realizing trunking on the basis of an LTE system. In terms of network architecture, an LTE-based Evolved Packet Core (EPC) and a Dispatching Sub-System (DSS) may implement complete service isolation and the group network of trunking application independent of LTE EPC equipment in the related art, thereby achieving the effects of private network isolation and public network sharing on the premise of no influence on normal operation of the existing LTE EPC equipment.

There exists a T1 link between a base station and an LTE-based Push To Talk Dispatching Server (PDS) under a normal condition, the T1 link may support all trunking service functions when working normally, and all trunking services are required to be processed by an EPC PDS. When the T1 link fails, for maximally reducing influence of a link failure on one or more trunking users, trunking group calling is required to be supported to ensure emergency communication in an emergency; and when the T1 link returns to normal from the failure, all the trunking service functions are required to be supported again, and subsequent trunking services are all required to be processed by the LTE-based EPC PDS.

A reading manner for LTE trunking system information reuses an implementation manner for an existing LTE public network, and for a cell supporting trunking communication, indicators about trunking-specific System Information Block 19 (SIB19) and SIB20 are added into a dispatching information list of SIB1, wherein the SIB19 is mainly configured to broadcast a public configuration related to trunking, and the SIB20 is mainly configured to indicate a system support capability of the cell.

Aiming at a problem in the related art of how to continue a trunking service when an LTE trunking system is in a fail soft mode, no effective solution has been presented currently. The documents CN 101984682, EP 1916852, CN 101772198, WO 9619906, WO 2013024334 and US 2013136098 provide respective different solutions, however, the above problem still remain unsolved.

### Summary

The invention is set out in the appended set of claims. The embodiments and/or examples of the following description which are not covered by the appended claims are considered as not being part of the present invention.

### Brief Description of the Drawings

Drawings, provided for further understanding of the disclosure and forming a part of the specification, are used to explain the disclosure together with embodiments of the disclosure rather than to limit the disclosure. In the drawings:
Fig. 1 is a flowchart of a method for implementing a call service according to an embodiment of the disclosure;
Fig. 2 is a flowchart of a single call of an LTE trunking terminal in a fail soft mode according to an example embodiment of the disclosure;
Fig. 3 is a flowchart of realizing a trunking function in an LTE trunking fail soft mode according to an example embodiment of the disclosure;
Fig. 4 is a flowchart of a method for sending indication information according to an embodiment of the disclosure;
Fig. 5 is a structural block diagram of a device for implementing a call service according to an embodiment of the disclosure;
Fig. 6 is a structural block diagram of a device for implementing a call service according to an example embodiment of the disclosure; and
Fig. 7 is a structural block diagram of a device for sending indication information according to an embodiment of the disclosure.

### Detailed Description of the Embodiments

The disclosure is described below with reference to the accompanying drawings and embodiments in detail. Note that, the embodiments of the disclosure and the features of the embodiments may be combined with each other if there is no conflict.

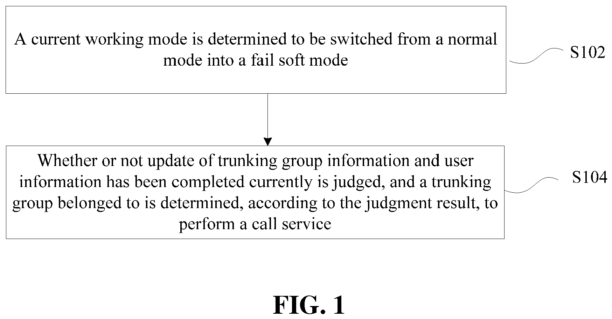

Fig. 1 is a flowchart of a method for implementing a call service according to an embodiment of the disclosure. As shown in Fig. 1, the method may include the following processing steps:
Step S102: a current working mode is determined to be switched from a normal mode into a fail soft mode; and
Step S104: whether or not update of trunking group information and user information has been completed currently is judged, and a trunking group belonged to is determined, according to the judgment result, to perform a call service.

In the related art, when an LTE trunking system is in a fail soft mode, it is impossible for a trunking terminal to continue a trunking service. According to the method shown in Fig. 1, the current working mode is determined to be switched from the normal mode to the fail soft mode; and whether or not the trunking group information and the user information have been updated or not currently is judged, and the trunking group belonged to is determined, according to the judgment result, to perform the call service, that is, in the case of that the current working mode has been switched from the normal mode to the fail soft mode, the trunking group information and user information which have been updated currently and the trunking group information and user information which have yet not been updated currently are divided into different trunking groups, and the call service is initiated according to the trunking group to which the terminal is belongs, so that the problem in the related art of how to continue the trunking service when the LTE trunking system is in the fail soft mode is solved, and the trunking call service of the terminal may still be implemented under the condition that the LTE trunking system is switched from the normal mode to the fail soft mode.

In an example embodiment, before the current working mode is determined to be switched from the normal mode to the fail soft mode in Step S102, the method may further include the following processing step:
Step S1: an SIB message is received from a base station, wherein information carried in the SIB message includes: indication information, wherein the indication information is used for indicating the working mode currently used by the base station.

In an example implementation process, since SIB20 is used for indicating a system support capability of the cell, the indication information, which is used for indicating the current working mode of the base station, may be added into the SIB20, wherein the working mode may include: the normal mode and the fail soft mode. The terminal may acquire the indication information about the current working mode of the base station by receiving additional SIB20 of an LTE trunk from the base station. When the base station is in the fail soft mode, the indication information is directly displayed to an upper-layer user.

In an example embodiment, in Step S104, the operation, that the trunking group belonged to is determined according to the judgment result, may include that: the trunking group belonged to is an updated trunking group if the trunking group information and the user information have been updated by the terminal; and the trunking group belonged to is a preset group if the trunking group information and the user information have not been updated by the terminal.

In an example embodiment, for a terminal in the fail soft mode, if the terminal has not finished updating the trunking group information and the user information, the terminal may only belong to a preset group (applicable to an emergency call) member as a default because of lack of the trunking group information, and the upper-layer user may only select to initiate a group call to this specific group. If the terminal has been successfully registered and finished updating the trunking group information and the user information, the base station acquires the user information and the trunking group information from a core DSS during call access or handover, and the terminal may perform a trunking service according to the trunking group information which is currently used.

In an example embodiment, in Step S104, the operation that the call service is performed may include the following operation:
Step S2: a call connection which has been established in the normal mode is released, and a bearer context resource occupied by the call connection is deleted; and
Step S3: a bearer context resource allocated by the base station in the fail soft mode is readopted for the call service.

In an example embodiment, when the terminal is switched from the normal mode to the fail soft mode, if the terminal is currently a speaking right user of a single call or a group call, a Non-Access Stratum (NAS) of the terminal locally deactivates an Evolved Packet System (EPS) bearer context established for a call, and notifies a Radio Resource Control (RRC) layer to locally release an RRC connection. If the terminal is currently in an answering state, a user data plane of the terminal notifies the NAS to delete the bearer context resource established for an answering user.

In an example embodiment, in Step S104, the operation that the call service is performed may include the following steps:
Step S4: a trunking group information updating request is received from the base station, wherein information carried in the trunking group information updating request includes: information of clearing local security context information of the terminal; and
Step S5: the security context information is cleared according to the trunking group information updating request.

In an example embodiment, when the terminal is switched from the normal mode to the fail soft mode, if the terminal is in the normal mode, NAS signalling and RRC signalling may both be subjected to integrity protection and encryption protection, and when the terminal is switched from the normal mode to the fail soft mode, the NAS signalling and the RRC signalling may not be subjected to integrity protection and encryption protection. One or more NAS security attributes of a group call are set by taking a group as a element, and are associated with a group number during updating the group information, and the base station in the fail soft mode may simulate a DPS function to initiate a group clearing security algorithm-based group information updating request to further clear a security context in an answering state. For a security context in an RRC connection state, the NAS and the RRC layer locally clear the security context, and a null algorithm is adopted for encryption and integrity protection.

In an example embodiment, in Step S104, the operation that the call service is performed may include the following operation:
Step S6: single call signalling is sent to the base station, wherein information carried in the single call signalling includes: a Mobile Directory Number (MDN) of a called terminal, wherein the MDN is used for being matched with an MDN acquired after the called terminal is successfully registered in the base station; and
Step S7: speaking right indication information is received from the base station, and the call service is performed with the called terminal, wherein the speaking right indication information is sent after the base station initiates paging to the called terminal according to the MDN and receives a paging response from the called terminal.

In an example embodiment, when the terminal in the fail soft mode performs a single call, an MDN may be adopted for paging. When the terminal in the normal mode updates the group information, the terminal may store the MDN. When the terminal is switched from the normal mode to the fail soft mode, the terminal may perform calling paging through single call signalling, wherein information carried in the single call signalling includes: the MDN of the called user; and when the terminal performs called paging, the MDN may directly be used for paging, and a Temporary Mobile Subscriber Identity (TMSI) is not adopted for paging. The Base station is not required to store a corresponding relationship information between the MDN of the called user and TMSI of the called user, but the terminal performs MDN matching when receiving paging. The terminal responds to paging if the MDNs are consistent, and does not respond to paging if the MDNs are inconsistent.

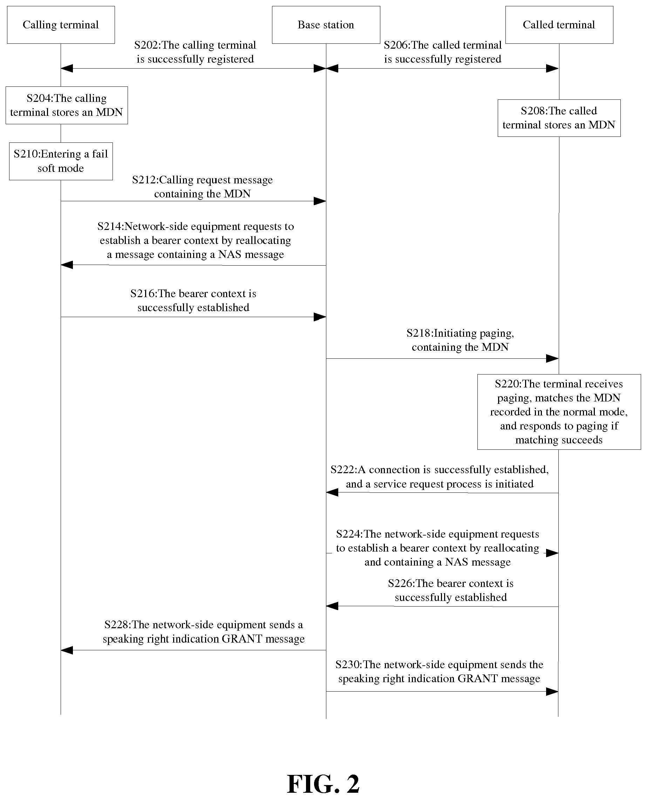

Fig. 2 is a flowchart of a single call of an LTE trunking terminal in a fail soft mode according to an example embodiment of the disclosure. As shown in Fig. 2, the flow may include the following steps:
Step S202: a calling terminal is successfully registered in a normal mode, and the base station allocates an MDN to the calling terminal;
Step S204: the calling terminal stores the MDN allocated by the base station;
Step S206: the called terminal is successfully registered in the normal mode, and the base station allocates an MDN to the called terminal;
Step S208: the called terminal stores the MDN allocated by the base station;
Step S210: the calling terminal acquires indication information about a current running mode of the base station by receiving additional SIB20 of an LTE trunk from the base station, and when the base station is in the fail soft mode, the calling terminal is switched from the normal mode to the fail soft mode;
Step S212: the calling terminal performs calling paging through a single call signalling, wherein information carried in the single call signalling includes: the MDN of the called terminal;
Step S214: the base station requests to establish a bearer context by reallocating a message containing a NAS message;
Step S216: the calling terminal successfully establishes the bearer context with the base station;
Step S218: the base station initiates paging according to the MDN carried in the single call signalling after receiving the single call signalling, wherein the information carried in the single call signalling includes: the MDN of the called terminal;
Step S220: the called terminal parses the MDN of the called terminal from paging after receiving the paging, performs matching according to the MDN, stored in the normal mode, of the called terminal, and responds to paging if matching succeeds;
Step S222: the called terminal successfully establishes a connection with the base station, and the called terminal initiates a service requesting process to the base station;
Step S224: the base station requests to establish a bearer context by reallocating a message containing a NAS message;
Step S226: the called terminal successfully establishes the bearer context with the base station;
Step S228: the base station sends a speaking right indication GRANT message to the calling terminal; and
Step S230: the base station sends the speaking right indication GRANT message to the called terminal.

Therefore, by the above-mentioned flow, the single call service may be performed between the calling terminal and the called terminal.

In an example embodiment, in Step S104, the operation that the call service is performed may include the following step:
Step S8: group call signalling is sent to the base station, wherein the group call signalling is used for enabling the base station to initiate paging to a trunking group to which the terminal belongs.

In an example embodiment, since a group call, which is different from the single call, only requires the calling terminal to establish a communication link with the base station, the calling terminal may initiate group call signalling to the base station, and the base station may initiate paging to all terminals in a trunking group, to which the calling terminal belongs, according to the group call signalling.

In an example embodiment, after the trunking group belonged to is determined, according to the judgment result, to perform the call service in Step S104, the method may further include the following operation:
Step S9: an SIB message resent by the base station is received, and the working mode is determined to be switched from the fail soft mode to the normal mode according to the SIB message which is resent;
Step S10: a registration request message is resent to the base station, wherein information carried in the registration request message includes: a check value of the trunking group belonged to, wherein the check value is used for enabling the base station to determine whether or not it is necessary to update the trunking group belonged to; and
Step S11: when it is determined that it is necessary to update the trunking group belonged to, trunking group information to be updated and security context information to be updated are acquired, and the call service in the normal mode is recovered, or, when it is determined that it is unnecessary to update the trunking group belonged to, the security context information to be updated is acquired from the base station, and the call service in the normal mode is recovered.

In an example embodiment, when the base station is switched from the fail soft mode to the normal mode, the terminal is required to be re-registered and retrieve a security context through a process of authentication and the like; and local trunking group information of the terminal may be recovered to be updated according to the check value of the trunking group information contained in a registration process. After receiving the check value of the trunking group information from the terminal, the base station judges whether or not it is necessary to update the local trunking group information of the terminal, and sends the trunking group information to be updated to the terminal if necessary.

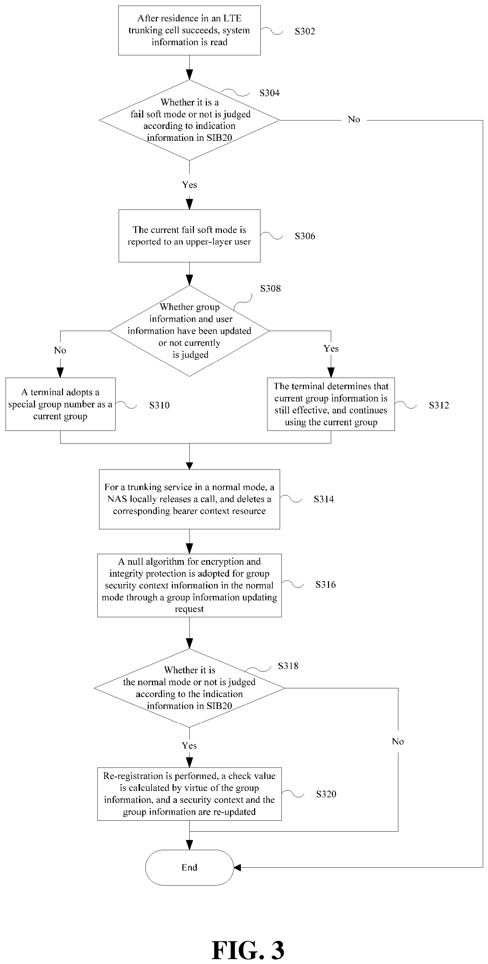

The example implementation process is further described below with reference to a preferred implementation mode shown in Fig. 3.

Fig. 3 is a flowchart of realizing a trunking function in an LTE trunking fail soft mode according to an example embodiment of the disclosure. As shown in Fig. 3, the flow may include the following processing steps:
Step S302: after successfully residing in a trunking cell, an LTE trunking terminal reads system information of the cell, including: SIB19 and SIB20;
Step S304: the terminal may acquire the indication information about a current working mode of a base station by receiving additional SIB20 of the LTE trunk from the base station, wherein the working mode may include: a normal mode and a fail soft mode; if the terminal is currently in the normal mode, a normal trunking service is performed, and the flow ends; if the terminal is currently in the fail soft mode, Step 306 is continued to be executed;
Step S306: the terminal reports an upper-layer user that the base station is currently in the fail soft mode and the terminal may not perform the normal trunking service;
Step S308: whether or not the terminal has updated trunking group information and user information currently is judged, Step S310 is executed if the terminal has not updated trunking the group information and the user information, and Step S312 is executed if the terminal has updated the trunking group information and the user information;
Step S310: if the terminal has yet not updated the trunking group information and the user information, the terminal may only belong to a preset group member as a default because of lack of the trunking group information, and the upper-layer user may only select to initiate a group call to the specific group;
Step S312: if the terminal has been successfully registered and has updated the trunking group information and the user information, the base station acquires the user information and the trunking group information from a core DSS during call access or handover, and the terminal may perform the trunking service according to the trunking group information which is currently used;
Step S314: when the normal mode is switched to the fail soft mode, whether the terminal is currently in a single call or group call speaking right state or a trunk answering state is judged, a NAS locally deletes established bearer context information if the terminal is currently in the single call or group call speaking right state, and if the terminal is currently in the answering state, a user data plane notifies the NAS to delete a bearer context resource of an answering user;
Step S316: when the base station is switched from the normal mode to the fail soft mode, if the base station is in the normal mode, NAS signalling and RRC signalling may both be subjected to integrity protection and encryption protection, and when the base station is switched from the normal mode to the fail soft mode, the NAS signalling and the RRC signalling may not be subjected to integrity protection and encryption protection; one or more NAS security attributes of a group call are set by taking a group as a element, and are associated with a group number during updating the group information, and the base station in the fail soft mode may simulate a DPS function to initiate a group clearing security algorithm-based group information updating request to further clear a security context in an answering state; for a security context in an RRC connection state, the NAS and an RRC layer locally clear the security context, and a null algorithm is adopted for encryption and integrity protection;
Step S318: the terminal may acquire the indication information about the current working mode of the base station by receiving the additional SIB20 of the LTE trunk from the base station, wherein the working mode may include: the normal mode and the fail soft mode; whether or not the base station has been switched from the fail soft mode to the normal mode is judged according to the indication information; Step S320 is executed if the base station has been switched from the fail soft mode to the normal mode; if the base station is still in the fail soft mode at present, the flow ends; and
Step S320: if the base station is currently in the normal mode, the terminal initiates an attachment process through the NAS, retrieves related information of the security context in the attachment process, and calculates a check value by virtue of the trunking group information, and the base station may re-update the trunking group information, thereby enabling the terminal to perform the normal trunking service.

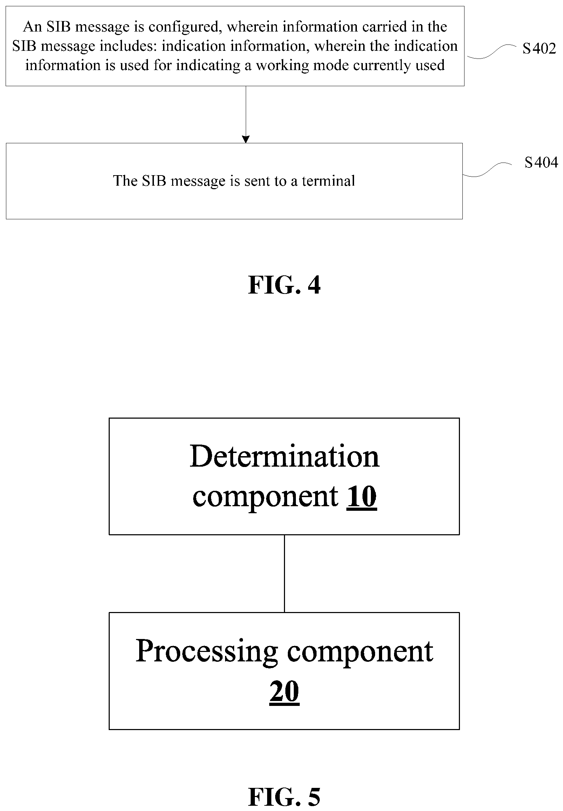

Fig. 4 is a flowchart of a method for sending indication information according to an embodiment of the disclosure. As shown in Fig. 4, the method for sending indication information may include:
Step S402: an SIB message is configured, wherein information carried in the SIB message includes: indication information, wherein the indication information is used for indicating a working mode currently used; and
Step S404: the SIB message is sent to a terminal.

In an example embodiment, the base station sends the SIB message to enable the terminal to acquire the current working mode of the base station and further determine that the base station is switched from a normal mode to a fail soft mode. When a LTE trunking terminal is switched from the normal mode to the fail soft mode, the base station may update security context information and trunking group information of the trunking terminal by simulating a core PDS function, thereby enabling the trunking terminal to continue a special trunking service. When the LTE trunking terminal is switched from the fail soft mode to the normal mode, the trunking terminal may reinitiate an attachment request message, wherein information carried in the attachment request message includes: current group information. After receiving the attachment request message, the base station may re-update the trunking group information and the security context information, thereby enabling the trunking terminal to perform a normal trunking service.

Fig. 5 is a structural block diagram of a device for implementing a call service according to an embodiment of the disclosure. As shown in Fig. 5, the device for implementing a call service may include: a determination component 10, configured to determine that a current working mode is switched from a normal mode into a fail soft mode; and a processing component 20, configured to judge whether or not update of trunking group information and user information has been completed currently, and determine a trunking group belonged to, according to a judgment result, to perform a call service.

By the device shown in Fig. 5, the problem of how to continue a trunking service when an LTE trunking system is in the fail soft mode in the related technology is solved, and the trunking call service of a terminal may still be implemented under the condition that the LTE trunking system is switched from the normal mode to the fail soft mode.

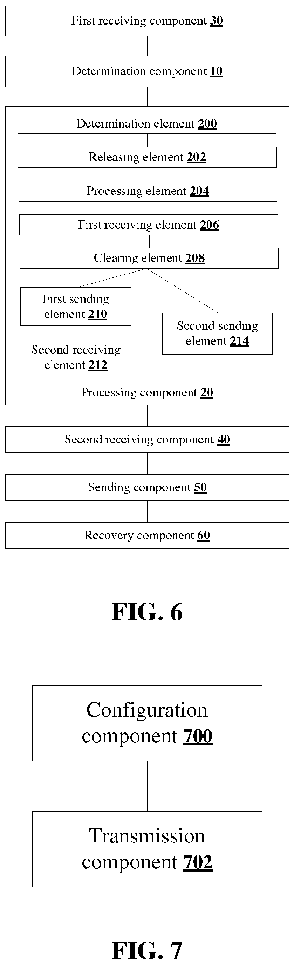

In an example embodiment, as shown in Fig. 6, the device may further include: a first receiving component 30, configured to receive an SIB message from a base station, wherein information carried in the SIB message includes: indication information, wherein the indication information is used for indicating the current working mode of the base station.

In an example embodiment, as shown in Fig. 6, the processing component 20 may include: a determination element 200, configured to determine the trunking group belonged to is an updated trunking group when the trunking group information and the user information have been updated, and that the trunking group belonged to is a preset group when the trunking group information and the user information have not been updated.

In an example embodiment, as shown in Fig. 6, the processing component 20 may include: a releasing element 202, configured to release a call connection which has been established in the normal mode, and delete a bearer context resource occupied by the call connection; and a processing element 204, configured to re-adopt a bearer context resource allocated by the base station in the fail soft mode to perform the call service.

In an example embodiment, as shown in Fig. 6, the processing component 20 may include: a first receiving element 206, configured to receive a trunking group information updating request from the base station, wherein information carried in the trunking group information updating request includes: information of clearing local security context information of the terminal; and a clearing element 208, configured to clear the security context information according to the trunking group information updating request.

In an example embodiment, as shown in Fig. 6, the processing component 20 may include: a first sending element 210, configured to send single call signalling to the base station, wherein information carried in the single call signalling includes: an MDN of a called terminal, wherein the MDN is configured to be matched with an MDN acquired after the called terminal is successfully registered in the base station; and a second receiving element 212, configured to receive speaking right indication information from the base station to perform the call service with the called terminal, wherein the speaking right indication information is sent after the base station initiates paging to the called terminal according to the MDN and receives a paging response from the called terminal.

In an example embodiment, as shown in Fig. 6, the processing component 20 may include: a second sending element 214, configured to send group call signalling to the base station, wherein the group call signalling is configured to enable the base station to initiate paging to the trunking group belonged to.

In an example embodiment, as shown in Fig. 6, the device may further include: a second receiving component 40, configured to receive an SIB message resent by the base station, and determine that the working mode is switched from the fail soft mode to the normal mode according to the SIB message which is resent; a sending component 50, configured to re-initiate a registration request message to the base station, wherein information carried in the registration request message includes: a check value of the trunking group belonged to, wherein the check value is used for enabling the base station to determine whether it is necessary to update the trunking group belonged to or not; and a recovery component 60, configured to, when determining that it is necessary to update the trunking group belonged to, acquire trunking group information and security context information to be updated from the base station, and recover the call service in the normal mode, or, when determining that it is unnecessary to update the trunking group belonged to, acquire the security context information to be updated from the base station, and recover the call service in the normal mode.

Fig. 7 is a structural block diagram of a device for sending indication information according to an embodiment of the disclosure. As shown in Fig. 7, the device for sending indication information may include: a configuration component 700, configured to configure an SIB message, wherein information carried in the SIB message includes: indication information, wherein the indication information is used for indicating a working mode currently used; and a sending component 702, configured to send the SIB message to a terminal.

From the above, it can be seen that the embodiment achieves technical effects as follows (it is important to note that these effects may be achieved by some preferred embodiments): the technical solutions of the disclosure disclose a method for implementing to continuing the trunking service in a fail soft mode of the LTE trunking terminal, and the base station adds the indication information of the current working mode of the base station (including: the normal mode and the fail soft mode) in the SIB message (for example: SIB20) which is sent by the base station. The LTE trunking terminal reads system information, and acquires the current working mode of the base station according to the indication information of the SIB message. The terminal parses the indication information from the SIB message sent by the base station, determines that the current working mode of the base station has been switched from the normal mode to the fail soft mode, and then determines the trunking group belonged to to continue the call service according to the judgment result of whether or not the trunking group information and the user information have been updated currently, so that the problem in the related art of how to continue the trunking service when the LTE trunking system is in the fail soft mode is solved, and the trunking call service of the terminal may still be implemented under the condition that the LTE trunking system is switched from the normal mode to the fail soft mode.

### Industrial Applicability

From the above, a method and device for implementing a call service and a method and device for sending indication information provided by the embodiments of the disclosure have beneficial effects as follows: the problem in the related art of how to continue a trunking service when an LTE trunking system is in a fail soft mode is solved, and a trunking call service of a terminal may still be implemented under the condition that a LTE trunking system is switched from a normal mode to the fail soft mode.

Obviously, those skilled in the art should know that each of the mentioned components or steps of the disclosure may be realized by universal computing devices; the modules or steps may be focused on single computing device, or distributed on the network formed by multiple computing devices; selectively, they may be realized by the program codes which may be executed by the computing device; thereby, the modules or steps may be stored in the storage device and executed by the computing device; and under some circumstances, the shown or described steps may be executed in different orders, or may be independently manufactured as each integrated circuit module, or multiple modules or steps thereof may be manufactured to be single integrated circuit module, thus to be realized. In this way, the disclosure is not restricted to any particular hardware and software combination.

The invention and its embodiments are not limited to the examples described in this specification but may vary within the scope of the appended claims.

## Claims

1. A method, performed by a terminal, for implementing a call service, comprising:
determining that a current working mode is switched from a normal mode into a fail soft mode;(S102) and
judging whether or not update of trunking group information and user information has been completed currently, and determining a trunking group belonged to, according to a judgment result, to perform a call service; (S104)
wherein determining the trunking group belonged to according to the judgment result comprises:
determining that the trunking group belonged to is an updated trunking group when the trunking group information and the user information have been updated and that the trunking group belonged to is a preset group when the trunking group information and the user information have not been updated;
wherein before determining that the current working mode is switched from the normal mode to the fail soft mode, the method further comprises:
receiving a System Information Block, SIB, message from a base station, wherein information carried in the SIB message comprises: indication information, wherein the indication information is used for indicating the working mode currently used by the base station.

2. The method as claimed in claim 1, wherein performing the call service comprises:
releasing a call connection which has been established in the normal mode, and deleting a bearer context resource occupied by the call connection; and
re-adopting a bearer context resource allocated by the base station in the fail soft mode to perform the call service.

3. The method as claimed in claim 1, wherein performing the call service comprises:
receiving a trunking group information updating request from the base station, wherein information carried in the trunking group information updating request comprises: information of clearing local security context information of a terminal; and
clearing the security context information according to the trunking group information updating request.

4. The method as claimed in claim 1, wherein performing the call service comprises:
sending single call signalling to the base station, wherein information carried in the single call signalling comprises: a Mobile Directory Number, MDN, of a called terminal, wherein the MDN is used for being matched with an MDN acquired after the called terminal is successfully registered in the base station; and
receiving speaking right indication information from the base station, and performing the call service with the called terminal, wherein the speaking right indication information is sent after the base station initiates paging to the called terminal according to the MDN and receives a paging response from the called terminal.

5. The method as claimed in claim 1, wherein performing the call service comprises:
sending group call signalling to the base station, wherein the group call signalling is used for enabling the base station to initiate paging to the trunking group belonged to.

6. The method as claimed in any one of claims 1 to 4, wherein after determining the trunking group belonged to, according to the judgment result, to perform the call service, the method further comprises:
receiving an SIB message resent by the base station, and determining that the working mode is switched from the fail soft mode to the normal mode according to the SIB message which is resent by the base station;
re-sending a registration request message to the base station, wherein information carried in the registration request message comprises: a check value of the trunking group belonged to, wherein the check value is used for enabling the base station to determine whether or not it is necessary to update the trunking group belonged to; and
when determining that it is necessary to update the trunking group belonged to, acquiring trunking group information to be updated and security context information to be updated from the base station, and recovering the call service in the normal mode; or, when determining that it is unnecessary to update the trunking group belonged to, acquiring the security context information to be updated from the base station, and recovering the call service in the normal mode.

7. A device in a terminal for implementing a call service comprising:
a first receiving component (30), configured to receive a System Information Block, SIB, message from a base station, wherein information carried in the SIB message comprises:
indication information, wherein the indication information is used for indicating the working mode currently used by the base station;
a determination component (10), configured to determine that a current working mode is switched from a normal mode into a fail soft mode; and
a processing component (20), configured to judge whether or not update of trunking group information and user information has been completed currently, and determine a trunking group belonged to, according to a judgment result, to perform a call service;
wherein the processing component comprises:
a determination element (200), configured to determine that the trunking group belonged to is an updated trunking group when the trunking group information and the user information have been updated and that the trunking group belonged to is a preset group when the trunking group information and the user information have not been updated.

8. The device as claimed in claim 7, wherein the processing component comprises:
the processing component (20) comprises:
a releasing element (202), configured to release a call connection which has been established in the normal mode, and delete a bearer context resource occupied by the call connection; and a processing element, configured to readopt a bearer context resource allocated by the base station in the fail soft mode to perform the call service;
or the processing component (20) comprises:
a first receiving element (206), configured to receive a trunking group information updating request from the base station, wherein information carried in the trunking group information updating request comprises: information of clearing local security context information of a terminal; and a clearing element, configured to clear the security context information according to the trunking group information updating request;
or the processing component (20) comprises:
a first sending element (210), configured to send single call signalling to the base station, wherein information carried in the single call signalling comprises: a Mobile Directory Number, MDN, of a called terminal, wherein the MDN is used for being matched with an MDN acquired after the called terminal is successfully registered in the base station; and a second receiving element, configured to receive speaking right indication information from the base station, and perform the call service with the called terminal, wherein the speaking right indication information is sent after the base station initiates paging to the called terminal according to the MDN and receives a paging response from the called terminal;
or the processing component (20) comprises:
a second sending element (212), configured to send group call signalling to the base station, wherein the group call signalling is used for enabling the base station to initiate paging to the trunking group belonged to.

9. The device as claimed in any one of claims 7 to 8, wherein the device further comprises:
a second receiving component(40), configured to receive an SIB message resent by the base station, and determine that the working mode is switched from the fail soft mode to the normal mode according to the SIB message which is resent by the base station;
a sending component(50), configured to re-send a registration request message to the base station, wherein information carried in the registration request message comprises: a check value of the trunking group belonged to, wherein, the check value is used for enabling the base station to determine whether or not it is necessary to update the trunking group belonged to; and
a recovery component(60), configured to, when determining that it is necessary to update the trunking group belonged to, acquire trunking group information to be updated and security context information to be updated from the base station, and recover the call service in the normal mode, or, when determining that it is unnecessary to update the trunking group belonged to, acquire the security context information to be updated from the base station, and recover the call service in the normal mode.

## Patentansprüche

1. Verfahren, das von einem Endgerät durchgeführt wird, zur Implementierung eines Rufdienstes, umfassend:
Bestimmen, dass ein aktueller Arbeitsmodus von einem Normalmodus in einen Fail-Soft-Modus umgeschaltet wird (S 102); und
Beurteilen, ob Aktualisierung von Bündelfunkgruppeninformationen und Benutzerinformationen gegenwärtig abgeschlossen ist oder nicht, und Bestimmen einer zugehörigen Bündelfunkgruppe gemäß einem Beurteilungsergebnis, um einen Rufdienst durchzuführen (S104);
wobei das Bestimmen der zugehörigen Bündelfunkgruppe gemäß dem Beurteilungsergebnis umfasst:
Bestimmen, dass die zugehörige Bündelfunkgruppe eine aktualisierte Bündelfunkgruppe ist, wenn die Bündelfunkgruppeninformationen und die Benutzerinformationen aktualisiert wurden, und dass die zugehörige Bündelfunkgruppe eine voreingestellte Gruppe ist, wenn die Bündelfunkgruppeninformationen und die Benutzerinformationen nicht aktualisiert wurden;
wobei das Verfahren vor dem Bestimmen, dass der aktuelle Arbeitsmodus vom Normalmodus in den Fail-Soft-Modus umgeschaltet wird, ferner umfasst:
Empfangen einer Systeminformationsblocknachricht, SIB-Nachricht, von einer Basisstation, wobei Informationen, die in der SIB-Nachricht übertragen werden, umfassen: Anzeigeinformationen, wobei die Anzeigeinformationen zum Anzeigen des von der Basisstation gegenwärtig verwendeten Arbeitsmodus verwendet werden.

2. Verfahren nach Anspruch 1, wobei das Durchführen des Rufdienstes umfasst:
Freigeben einer im Normalmodus hergestellten Rufverbindung und Löschen einer von der Rufverbindung belegten Trägerkontextressource; und
erneutes Anwenden einer von der Basisstation zugewiesenen Trägerkontextressource im Fail-Soft-Modus, um den Rufdienst durchzuführen.

3. Verfahren nach Anspruch 1, wobei das Durchführen des Rufdienstes umfasst:
Empfangen einer Bündelfunkgruppeninformations-Aktualisierungsanforderung von der Basisstation, wobei Informationen, die in der Bündelfunkgruppeninformations-Aktualisierungsanforderung übertragen werden, umfassen: Informationen zum Löschen lokaler Sicherheitskontextinformationen eines Endgeräts; und
Löschen der Sicherheitskontextinformationen gemäß der Bündelfunkgruppeninformations-Aktualisierungsanforderung.

4. Verfahren nach Anspruch 1, wobei das Durchführen des Rufdienstes umfasst:
Senden einer Einzelrufsignalisierung an die Basisstation, wobei Informationen, die in der Einzelrufsignalisierung übertragen werden, umfassen: eine Mobilverzeichnisnummer, MDN, eines angerufenen Endgeräts, wobei die MDN verwendet wird, um mit einer MDN verglichen zu werden, die nach erfolgreicher Registrierung des angerufenen Endgeräts in der Basisstation erfasst wurde; und
Empfangen von Sprechberechtigungsanzeigeinformationen von der Basisstation und Durchführen des Rufdienstes mit dem angerufenen Endgerät, wobei die Sprechberechtigungsanzeigeinformationen gesendet werden, nachdem die Basisstation einen Funkruf an das angerufene Endgerät gemäß der MDN initiiert hat und eine Funkrufantwort vom angerufenen Endgerät empfängt.

5. Verfahren nach Anspruch 1, wobei das Durchführen des Rufdienstes umfasst:
Senden einer Gruppenrufsignalisierung an die Basisstation, wobei die Gruppenrufsignalisierung verwendet wird, um der Basisstation zu ermöglichen, einen Funkruf an die zugehörige Bündelfunkgruppe zu initiieren.

6. Verfahren nach einem der Ansprüche 1 bis 4, wobei das Verfahren nach dem Bestimmen der zugehörigen Bündelfunkgruppe gemäß dem Beurteilungsergebnis zum Durchführen des Rufdienstes ferner umfasst:
Empfangen einer von der Basisstation erneut gesendeten SIB-Nachricht und Bestimmen, dass der Arbeitsmodus vom Fail-Soft-Modus in den Normalmodus umgeschaltet wird, gemäß der von der Basisstation erneut gesendeten SIB-Nachricht;
erneutes Senden einer Registrierungsanforderungsnachricht an die Basisstation, wobei Informationen, die in der Registrierungsanforderungsnachricht übertragen werden, umfassen: einen Prüfwert der zugehörigen Bündelfunkgruppe, wobei der Prüfwert verwendet wird, um die Basisstation zum Bestimmen zu befähigen, ob es notwendig ist oder nicht, die zugehörige Bündelfunkgruppe zu aktualisieren; und
Abrufen, wenn bestimmt wird, dass es notwendig ist, die zugehörige Bündelfunkgruppe zu aktualisieren, von zu aktualisierenden Bündelfunkgruppeninformationen und zu aktualisierenden Sicherheitskontextinformationen von der Basisstation und Wiederherstellen des Rufdienstes im Normalmodus; oder Abrufen, wenn bestimmt wird, dass es nicht notwendig ist, die Bündelfunkgruppe zu aktualisieren, der zu aktualisierenden Sicherheitskontextinformationen von der Basisstation und Wiederherstellen des Rufdienstes im Normalmodus.

7. Vorrichtung in einem Endgerät zum Implementieren eines Rufdienstes, umfassend:
eine erste Empfangskomponente (30), die zum Empfangen einer Systeminformationsblocknachricht, SIB-Nachricht, von einer Basisstation konfiguriert ist, wobei Informationen, die in der SIB-Nachricht übertragen werden, umfassen:
Anzeigeinformation, wobei die Anzeigeinformationen zum Anzeigen des von der Basisstation gegenwärtig verwendeten Arbeitsmodus verwendet werden;
eine Bestimmungskomponente (10), die konfiguriert ist, um zu bestimmen, dass ein aktueller Arbeitsmodus von einem Normalmodus in einen Fail-Soft-Modus umgeschaltet wird; und
eine Verarbeitungskomponente (20), die konfiguriert ist, um zu beurteilen, ob Aktualisierung von Bündelfunkgruppeninformationen und Benutzerinformationen gegenwärtig abgeschlossen ist oder nicht, und eine zugehörige Bündelfunkgruppe gemäß einem Beurteilungsergebnis zu bestimmen, um einen Rufdienst durchzuführen;
wobei die Verarbeitungskomponente umfasst:
ein Bestimmungselement (200), das konfiguriert ist, um zu bestimmen, dass die zugehörige Bündelfunkgruppe eine aktualisierte Bündelfunkgruppe ist, wenn die Bündelfunkgruppeninformationen und die Benutzerinformationen aktualisiert wurden, und dass die zugehörige Bündelfunkgruppe eine voreingestellte Gruppe ist, wenn die Bündelfunkgruppeninformationen und die Benutzerinformationen nicht aktualisiert wurden.

8. Vorrichtung nach Anspruch 7, wobei die Verarbeitungskomponente umfasst:
die Verarbeitungskomponente (20) umfasst:
ein Freigabeelement (202), das konfiguriert ist, um eine im Normalmodus hergestellte Rufverbindung freizugeben und eine von der Rufverbindung belegte Trägerkontextressource zu löschen; und ein Verarbeitungselement, das konfiguriert ist, um eine von der Basisstation zugewiesene Trägerkontextressource im Fail-Soft-Modus erneut anzuwenden, um den Rufdienst auszuführen;
oder die Verarbeitungskomponente (20) umfasst:
ein erstes Empfangselement (206), das konfiguriert ist, um eine Bündelfunkgruppeninformations-Aktualisierungsanforderung von der Basisstation zu empfangen, wobei Informationen, die in der Bündelfunkgruppeninformations-Aktualisierungsanforderung übertragen werden, umfassen: Informationen zum Löschen lokaler Sicherheitskontextinformationen eines Endgeräts; und ein Löschelement, das konfiguriert ist, um die Sicherheitskontextinformationen gemäß der Bündelfunkgruppeninformations-Aktualisierungsanforderung zu löschen;
oder die Verarbeitungskomponente (20) umfasst:
ein erstes Sendeelement (210), das zum Senden einer Einzelrufsignalisierung an die Basisstation konfiguriert ist, wobei Informationen, die in der Einzelrufsignalisierung übertragen werden, umfassen: eine Mobilverzeichnisnummer, MDN, eines angerufenen Endgeräts, wobei die MDN verwendet wird, um mit einer MDN verglichen zu werden, die nach erfolgreicher Registrierung des angerufenen Endgeräts in der Basisstation erfasst wurde; und ein zweites Empfangselement, das konfiguriert ist, um Sprechberechtigungsanzeigeinformationen von der Basisstation zu empfangen und den Rufdienst mit dem angerufenen Endgerät durchzuführen, wobei die Sprechberechtigungsanzeigeinformationen gesendet werden, nachdem die Basisstation einen Funkruf an das angerufene Endgerät gemäß der MDN initiiert hat und eine Funkrufantwort vom angerufenen Endgerät empfängt;
oder die Verarbeitungskomponente (20) umfasst:
ein zweites Sendeelement (212), das zum Senden einer Gruppenrufsignalisierung an die Basisstation konfiguriert ist, wobei die Gruppenrufsignalisierung verwendet wird, um der Basisstation zu ermöglichen, einen Funkruf an die zugehörige Bündelfunkgruppe zu initiieren.

9. Vorrichtung nach einem der Ansprüche 7 bis 8, wobei die Vorrichtung ferner umfasst:
eine zweite Empfangskomponente (40), die konfiguriert ist, um eine von der Basisstation erneut gesendete SIB-Nachricht zu empfangen und gemäß der von der Basisstation erneut gesendeten SIB-Nachricht zu bestimmen, dass der Arbeitsmodus vom Fail-Soft-Modus in den Normalmodus umgeschaltet wird;
eine Sendekomponente (50), die zum erneuten Senden einer Registrierungsanforderungsnachricht an die Basisstation konfiguriert ist, wobei Informationen, die in der Registrierungsanfragenachricht übertragen werden, umfassen: einen Prüfwert der zugehörigen Bündelfunkgruppe, wobei der Prüfwert verwendet wird, um die Basisstation zum Bestimmen zu befähigen, ob es notwendig ist, die zugehörige Bündelfunkgruppe zu aktualisieren oder nicht; und
eine Wiederherstellungskomponente (60), die so konfiguriert ist, dass sie, wenn bestimmt wird, dass es notwendig ist, die zugehörige Bündelfunkgruppe zu aktualisieren, zu aktualisierende Bündelfunkgruppeninformationen und zu aktualisierende Sicherheitskontextinformationen von der Basisstation abruft und den Rufdienst im Normalmodus wiederherstellt oder, wenn bestimmt wird, dass es nicht notwendig ist, die zugehörige Bündelfunkgruppe zu aktualisieren, die zu aktualisierenden Sicherheitskontextinformationen von der Basisstation abruft und den Rufdienst im Normalmodus wiederherstellt.

## Revendications

1. Procédé, mis en œuvre par un terminal, pour mettre en œuvre un service d'appel, comprenant :
déterminer qu'un mode de travail actuel est passé d'un mode normal à un mode dégradé ; (S 102) et
évaluer si la mise à jour des informations de groupe de liaisons et des informations d'utilisateur est actuellement terminée ou non et déterminer un groupe de liaisons d'appartenance, en fonction du résultat de l'évaluation, pour effectuer un service d'appel ; (S 104)
dans lequel la détermination du groupe de liaisons d'appartenance en fonction du résultat de l'évaluation comprend :
déterminer que le groupe de liaisons d'appartenance est un groupe de liaisons mis à jour lorsque les informations de groupe de liaisons et les informations d'utilisateur ont été mises à jour et que le groupe de liaisons d'appartenance est un groupe prédéfini lorsque les informations de groupe de liaisons et les informations d'utilisateur n'ont pas été mises à jour ;
dans lequel, avant de déterminer que le mode de travail actuel est passé du mode normal vers le mode dégradé, le procédé comprend en outre :
recevoir un message de bloc d'informations système, SIB, d'une station de base, l'information contenue dans le message SIB comprenant : une information d'indication, l'information d'indication étant utilisée pour indiquer le mode de travail actuellement utilisé par la station de base.

2. Procédé selon la revendication 1, dans lequel la réalisation du service d'appel comprend :
libérer une connexion d'appel établie en mode normal et supprimer une ressource de contexte de porteuse occupée par la connexion d'appel ; et
ré-adopter une ressource de contexte de porteuse allouée par la station de base en mode dégradé pour effectuer le service d'appel.

3. Procédé selon la revendication 1, dans lequel la réalisation du service d'appel comprend :
recevoir une demande de mise à jour d'informations de groupe de liaisons en provenance de la station de base, les informations acheminées dans la demande de mise à jour d'informations de groupe à liaisons comprenant : des informations de suppression d'informations de contexte de sécurité locale d'un terminal ; et
supprimer les informations de contexte de sécurité conformément à la demande de mise à jour d'informations de groupe de liaisons.

4. Procédé selon la revendication 1, dans lequel la réalisation du service d'appel comprend :
envoyer une signalisation d'appel unique à la station de base, l'information contenue dans la signalisation d'appel unique comprenant : un numéro de répertoire mobile, MDN, d'un terminal appelé, le MDN étant utilisé pour être mis en correspondance avec un MDN acquis après que le terminal appelé a été enregistré avec succès dans la station de base ; et
recevoir des informations d'indication de droit de parole de la station de base et effectuer le service d'appel avec le terminal appelé, les informations d'indication de droit de parole étant envoyées après que la station de base a lancé la recherche de personnes vers le terminal appelé conformément au MDN et reçoit une réponse de recherche de la part du terminal appelé.

5. Procédé selon la revendication 1, dans lequel la réalisation du service d'appel comprend :
envoyer une signalisation d'appel de groupe à la station de base, la signalisation d'appel de groupe étant utilisée pour permettre à la station de base de lancer la recherche de personnes vers le groupe de liaisons d'appartenance.

6. Procédé selon l'une quelconque des revendications 1 à 4, dans lequel, après la détermination du groupe de liaisons partagées d'appartenance, en fonction du résultat de l'évaluation, pour effectuer le service d'appel, le procédé comprend en outre :
recevoir un message SIB renvoyé par la station de base et déterminer que le mode de travail est passé du mode dégradé au mode normal conformément au message SIB qui est renvoyé par la station de base ;
renvoyer un message de demande d'enregistrement à la station de base, l'information contenue dans le message de demande d'enregistrement comprenant : une valeur de contrôle du groupe de liaisons d'appartenance, la valeur de contrôle étant utilisée pour permettre à la station de base de déterminer s'il est nécessaire ou pas de mettre à jour le groupe de liaisons d'appartenance ; et
lorsqu'il est déterminé qu'il est nécessaire de mettre à jour le groupe de liaisons d'appartenance, acquérir les informations de groupe de liaisons à mettre à jour et les informations de contexte de sécurité à mettre à jour à partir de la station de base et récupérer le service d'appel en mode normal ; ou, lorsqu'il est déterminé qu'il n'est pas nécessaire de mettre à jour le groupe de liaisons d'appartenance, acquérir les informations de contexte de sécurité à mettre à jour à partir de la station de base et récupérer le service d'appel en mode normal.

7. Dispositif dans un terminal pour mettre en œuvre un service d'appel comprenant :
un premier composant récepteur (30), configuré pour recevoir un message de bloc d'informations système, SIB, d'une station de base, dans lequel les informations véhiculées dans le message SIB comprennent :
une information d'indication, l'information d'indication étant utilisée pour indiquer le mode de travail actuellement utilisé par la station de base ;
un composant de détermination (10), configuré pour déterminer qu'un mode de travail actuel est passé d'un mode normal à un mode dégradé ; et
un composant de traitement (20), configuré pour évaluer si la mise à jour des informations de groupe de liaisons et des informations d'utilisateur est actuellement terminée ou non et pour déterminer un groupe de liaisons d'appartenance, en fonction du résultat de l'évaluation, pour effectuer un service d'appel ;
dans lequel le composant de traitement comprend :
un élément de détermination (200) configuré pour déterminer que le groupe de liaisons d'appartenance est un groupe de liaisons mis à jour lorsque les informations de groupe de liaisons et les informations d'utilisateur ont été mises à jour et que le groupe de liaisons d'appartenance est un groupe prédéfini lorsque les informations de groupe de liaisons et les informations d'utilisateur n'ont pas été mises à jour.

8. Dispositif selon la revendication 7, le composant de traitement comprenant :
le composant de traitement (20) comprend :
un élément de libération (202) configuré pour libérer une connexion d'appel établie en mode normal et supprimer une ressource de contexte de porteuse occupée par la connexion d'appel ; et un élément de traitement, configuré pour ré-adopter une ressource de contexte de porteuse allouée par la station de base en mode dégradé pour effectuer le service d'appel ;
ou le composant de traitement (20) comprend :
un premier élément de réception (206), configuré pour recevoir une demande de mise à jour d'informations de groupe de liaisons de la station de base, les informations acheminées dans la demande de mise à jour d'informations de groupes de liaisons comprenant : des informations de suppression des informations de contexte de sécurité locale d'un terminal ; et un élément de suppression, configuré pour supprimer les informations de contexte de sécurité conformément à la demande de mise à jour d'informations de groupe de liaisons ;
ou le composant de traitement (20) comprend :
un premier élément d'envoi (210), configuré pour envoyer une signalisation d'appel unique à la station de base, l'information contenue dans la signalisation d'appel unique comprenant : un numéro de répertoire mobile, MDN, d'un terminal appelé, le MDN étant utilisé pour être mis en correspondance avec un MDN acquis après que le terminal appelé a été enregistré avec succès dans la station de base ; et un second élément de réception, configuré pour recevoir des informations d'indication de droit de parole de la station de base et exécuter le service d'appel avec le terminal appelé, les informations d'indication de droit de parole étant envoyées après que la station de base a lancé une recherche vers le terminal appelé selon le MDN et reçoit une réponse de recherche du terminal appelé ;
ou le composant de traitement (20) comprend :
un second élément d'envoi (212), configuré pour envoyer une signalisation d'appel de groupe à la station de base, la signalisation d'appel de groupe étant utilisée pour permettre à la station de base de lancer la recherche de personnes vers le groupe de liaisons d'appartenance.

9. Dispositif selon l'une quelconque des revendications 7 à 8, le dispositif comprenant en outre :
un deuxième composant de réception (40), configuré pour recevoir un message SIB renvoyé par la station de base et déterminer que le mode de travail est passé du mode dégradé au mode normal conformément au message SIB qui est renvoyé par la station de base ;
un composant d'envoi (50), configuré pour renvoyer un message de demande d'enregistrement à la station de base, l'information contenue dans le message de demande d'enregistrement comprenant : une valeur de contrôle du groupe de liaisons d'appartenance, la valeur de contrôle étant utilisée pour permettre à la station de base de déterminer s'il est nécessaire ou pas de mettre à jour le groupe de liaisons d'appartenance ; et
un composant de récupération (60), configuré pour, lorsqu'il est déterminé qu'il est nécessaire de mettre à jour le groupe de liaisons d'appartenance, acquérir les informations de groupe de liaisons à mettre à jour et les informations de contexte de sécurité à mettre à jour à partir de la station de base et récupérer le service d'appel en mode normal ou, lorsqu'il est déterminé qu'il n'est pas nécessaire de mettre à jour le groupe de liaisons d'appartenance, acquérir les informations de contexte de sécurité à mettre à jour à partir de la station de base et récupérer le service d'appel en mode normal.
